## Europäisches Patentamt
## European Patent Office
## Office européen des brevets

(19)

(11) Publication number: **0 195 907**
**A2**

(12) # EUROPEAN PATENT APPLICATION

(21) Application number: **86101550.1**

(51) Int. Cl.⁴: **B 65 G 15/42**

(22) Date of filing: **06.02.86**

(30) Priority: **22.02.85 IT 2086485 U**

(71) Applicant: **PEDRINI S.p.A., Via Fusine 1, I-24060 Carobbio Degli Angeli Bergamo (IT)**

(43) Date of publication of application: **01.10.86 Bulletin 86/40**

(72) Inventor: **Pedrini, Luigi, Via Fusine 3, i-24060 Carobbio Degli Angeli Bergamo (IT)**

(74) Representative: **Modiano, Guido et al, MODIANO, JOSIF, PISANTY & STAUB Modiano & Associati Via Meravigli, 16, I-20123 Milan (IT)**

(84) Designated Contracting States: **CH DE FR LI**

(54) **Conveyor belt structure for surface working tiles of ceramics, marble, granite, and the like.**

(57) The conveyor belt structure comprises a continuously movable web (2) formed of a lower layer (20), impregnated with polyurethane and/or rubber, an intermediate load-bearing layer (21) and an upper layer (22), of vulcanized rubber. Formed on the upper layer (22) are projections (30), having bevelled lead-in edges (32) and defining seats (40) for removably accommodating therein tiles (5).

# "CONVEYOR BELT STRUCTURE FOR SURFACE WORKING TILES OF CERAMICS, MARBLE, GRANITE, AND THE LIKE"

This invention relates to a belt conveyor structure for surface working tiles of ceramics, marble, granite, and the like.

As is known, tiles, following their production step, are subjected to surface working for dressing, calibrating, polishing, and so forth, in order to impart a desired finish to their exposed surface.

Such surface working is currently performed with the aid of conveyor belts which are operative to take the tiles under the various working heads.

Conveyor belts are currently provided above which longitudinal guides, with respect to the lay of the conveyor belt, are provided which practically laterally guide the tiles, which are arranged side-by-side with their adjacent sides in mutual contact.

Thus, the tile is not held securely as it reaches the working heads, and above all, the tiles push against one another at the edges.

Tiles in edge contact relationship may suffer local damage, especially at their corners.

Another disadvantage of prior approaches is that, even where small size tiles are being worked, it becomes possible to    form rows comprising individual tiles arranged one after another and so forth.

It is the aim of this invention to overcome the prior disadvantages by providing a conveyor belt structure for surface working tiles of ceramics, marble, granite, and the like, which prevents tiles being worked from contacting one another, and which can hold the tiles securely in place on the same being taken under the various operational heads, thus affording improved and faster working.

Within the above aim, it is a particular object of this invention to provide a conveyor belt structure whereby, in the instance of small size tiles being processed, several tiles can be worked in side-by-side as well as in arrayed relationship.

Another object of this invention is to provide a conveyor belt structure which is readily applied to the machinery traditionally employed for surface working tiles, without posing any special problems at the assembly time.

A not least object of this invention is to provide a conveyor belt structure for surface working tiles which, owing to its peculiar construction, can give full assurance of being reliable and safe to use, and be competitive from a purely economical standpoint.

The above aim, and these and other objects to become apparent herein below, are achieved by a conveyor belt structure for surface working tiles of ceramics, marble, granite, and the like, comprising a continuously movable web, characterised in that said web has, at its working face, a plurality of impressions defining seats for removably housing tiles and the like therein.

Further features and advantages will be apparent from the detailed description of a **conveyor belt** structure for surface working tiles of ceramics, marble, granite, and the like, as shown by way of illustration and not of limitation in the accompanying drawing, where:

Figure 1 shows diagramatically the conveyor belt structure according to the invention, in elevation;

Figure 2 is a perspective view showing diagramatically one possible configuration of the conveyor belt's **working face;**

Figure 3 shows a plan view of the working face of one possible configuration of the conveyor belt; **and**

Figures 4,5 and 6 show cross-sectional views of the conveyor belt in different sizes to accommodate different size tiles.

With reference to the cited drawing figures, the conveyor belt structure for surface working tiles of ceramics, marble, granite, and the like, according **to the** invention, as generally indicated by the reference numeral 1, comprises a web, generally indicated at 2, **which** is driven continuously to run around a pair of transport rollers, generally indicated at 3, so as to take the tiles, generally indicated at 5, under the various working stations, indicated at 6, which may be of any types whatsoever, known per se, depending on the surface working operation to be .performed.

A peculiar aspect of the invention **is** that the cited **web** 2 has, at its working face, impressions which have a configuration conforming with the tiles being worked, so as to define seats

0195907

for removably housing the tiles therein.

More in detail, the web 2 has a lower layer 20, i.e. a remote layer from the working face, which advantageously comprises a ply impregnated with either polyurethane or rubber, above which is a middle layer forming the web resisting structure which comprises advantageously three plies, indicated at 21.

The working face comprises an upper layer, generally indicated at 22, which is advantageously made of vulcanised rubber having, advantageously integral with it, projections 30 bordering the various impressions or seats indicated at 40.

To facilitate precision fitting of the tiles in the various seats 40, the projections 30 have, on their sides facing a seat, a lead-in angle 32 which facilitates the tile centering and fitting, as well as tile removal on completion of the working process.

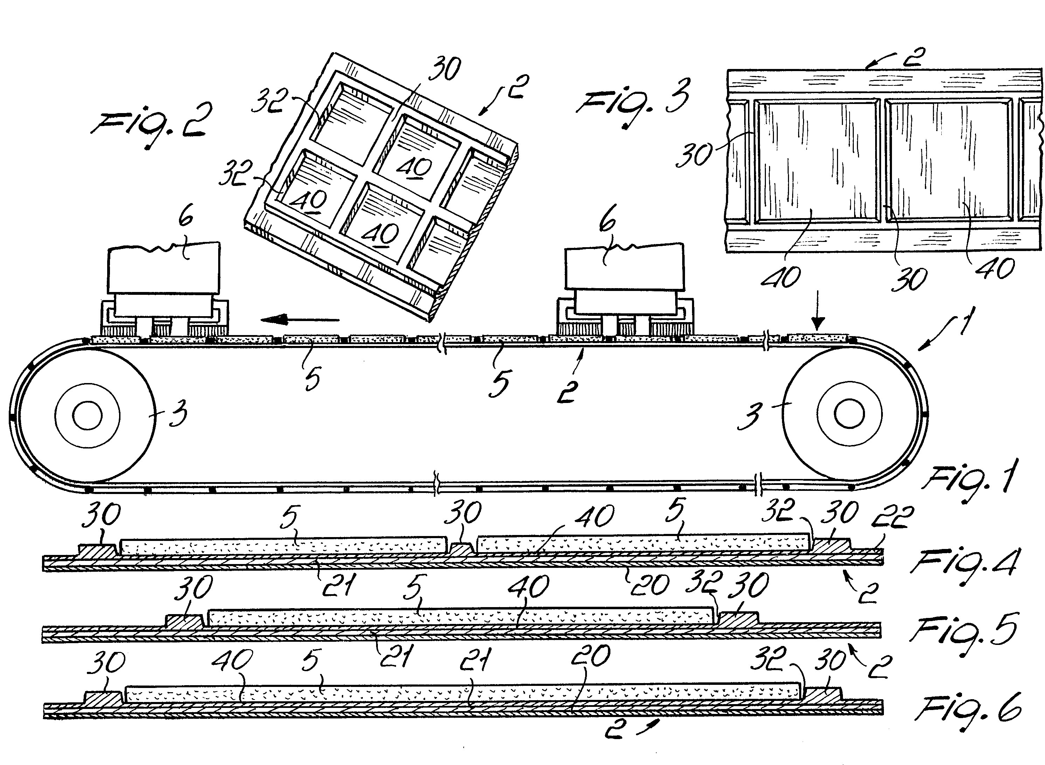

As shown in Figures 3 to 4, it is possible, depending on the tile size, to arrange up to two or more tiles side-by-side across the belt, so as to greatly speed up the production steps.

The cited projections 30 delimit, peripherally in both directions, the seats 40 such as to form in practice a grid, as shown diagramatically in Figures 2 and 3, with projections lying longitudinally and transversely to the web, thereby the edges of the side-by-side tiles will never contact one another, thus preventing any possible damaging.

Furthermore, by having the tiles housed within the seats, even where the tiles are under the working heads 6, they are subjected to no displacement, thereby working can be faster and more accurate.

In practicing the invention, the materials used, so long as compatible with the specific application, and the dimensions and contingent shapes, may be any suitable ones to meet individual requirements.

## CLAIMS

1. A conveyor belt structure (1) for surface working tiles of ceramics, marble, granite, and the like, comprising a continuously movable web (2), characterized in that said web (2) has, at its working face, a plurality of impressions defining seats (40) for removably housing tiles (5) and the like therein.

2. A conveyor belt structure (1) for surface working tiles (5) of ceramics, marble, granite, and the like, according to the preceding claim characterized in that said web (2) has a lower layer (20) formed of a ply, an intermediate layer (21) forming the load-bearing structure of the web (2), and an upper layer (22) forming said working face.

3. A conveyor belt structure (1) for surface working tiles (5) of ceramics, marble, granite, and the like, according to the preceding claims, characterized in that said upper layer (22) formed of vulcanized rubber has projections (30) defining said seats (40) integral therewith.

4. A conveyor belt structure (1) for surface working tiles (5) of ceramics, marble, granite, and the like, according to one or more of the preceding claims, characterized in that said projections (30) have, at their edges facing said seats (40), a lead-in angle (32).

5. A conveyor belt structure for surface working tiles of ceramics, marble, granite, and the like, characterized in that said projections (30) extend along longitudinal and transverse directions on said web (2).

6. A conveyor belt structure (1) according to claim 2, characterized in that said ply (20) is impregnated with polyurethane.

7. A conveyor belt structure (1) according to claim 2, characterized in that said ply (20) is impregnated with rubber.

8. A conveyor belt structure (1) according to claim 2, characterized in that said ply (20) is impregnated with polyurethane and rubber.

Fig.1  Fig.2  Fig.3  Fig.4  Fig.5  Fig.6

0195907